Europäisches Patentamt

European Patent Office

Office européen des brevets

(11) Veröffentlichungsnummer : **0 308 471 B1**

(19)

(12) **EUROPÄISCHE PATENTSCHRIFT**

(45) Veröffentlichungstag der Patentschrift :
03.06.92 Patentblatt 92/23

(21) Anmeldenummer : 88903226.4

(22) Anmeldetag : 31.03.88

(86) Internationale Anmeldenummer :
PCT/EP88/00267

(87) Internationale Veröffentlichungsnummer :
WO 88/07570 06.10.88 Gazette 88/22

(51) Int. Cl.⁵ : **C09K 3/10, F16J 15/12**

(54) **ASBESTFREIER WERKSTOFF ZUR VERWENDUNG ALS DICHT-, DÄMPF- UND/ODER TRENNELEMENT.**

Die Akte enthält technische Angaben, die nach dem Eingang der Anmeldung eingereicht wurden und die nicht in dieserPatentschrift enthalten sind.

(30) Priorität : 02.04.87 DE 3711077

(43) Veröffentlichungstag der Anmeldung :
29.03.89 Patentblatt 89/13

(45) Bekanntmachung des Hinweises auf die
Patenterteilung :
03.06.92 Patentblatt 92/23

(84) Benannte Vertragsstaaten :
AT BE CH DE FR GB IT LI LU NL SE

(56) Entgegenhaltungen :
EP-A- 0 166 376
FR-A- 2 439 812
FR-A- 2 482 124
US-A- 4 176 097

(73) Patentinhaber : **FRENZELIT-WERKE GMBH & CO. KG**
**Postfach 1140**
**W-8582 Bad Berneck/Frankenhammer (DE)**

(72) Erfinder : **BAUER, Gerhard**
**Schlömen 14**
**W-8651 Neuenmarkt (DE)**
Erfinder : **RÖDEL, Reinhard**
**Im Töpfergrubenweg 12**
**W-8670 Hof/Saale (DE)**

(74) Vertreter : **Patentanwälte Deufel, Hertel, Lewald**
**Isartorplatz 6 Postfach 26 02 47**
**W-8000 München 26 (DE)**

**Beschreibung**

Verbundwerkstoffe auf Asbestbasis mit Elastomermatrix zeigen selbst nach Aushärten der Bindemittel bei hohen energetischen Belastungen, z.B. thermischen, mechanischen oder akustischen Belastungen, oder bei Lastwechseln kompensierende Effekte.

Wegen der bekannten Gesundheitsgefahr durch Asbeststaub muß Asbest ersetzt werden.

Bisher bekannte und verfügbare asbestfreie Verbundwerkstoffe zur Verwendung als Dicht-, Dämpf- und-/oder Trennelement besitzen diese kompensierenden Effekte nicht. Die sich dadurch ergebenden Probleme sind nur mit großem konstruktiven oder finanziellen Aufwand lösbar. Z.B. werden Flachdichtungen in der Technik in Apparaten, Anlagen und Rohrleitungen häufig hohen Drücken und hoher Temperatur ausgesetzt. Dies gilt z.B. besonders im Dampfbereich. Diese Belastungen bringen mit sich, daß unter anderem infolge Lastwechsel selbst in sogenannten statischen Dichtverbindungen lokal dynamische Kräfte und Momente auftreten Besteht nun im Dichtwerkstoff keine Möglichkeit, diese lokalen Kräfte und Momente aufzunehmen und/oder umzuleiten bzw. zu verteilen (hat das Material also keine kompensierenden Effekte) kommt es zum Versagen des Materials, was bis zum Bruch führen kann

Es wäre also Wünschenswert, asbestfreie Werkstoffe mit kompensierenden Effekten zu haben, also Werkstoffe, die kein sprödes Materialverhalten zeigen, sondern elastisches oder plastisches Verhalten bzw. Mischformen daraus.

Es wurde nun gefunden, daß durch Einbinden von bestimmten, plättchenförmingen anorganischen Stoffen in die elastomere Matrix die dem Asbest eigentümlichen Effekte nachgestellt werden können. Dies ist wohl auf in sich verschiebbaren Schichtebenen solcher plättchenförmigen Stoffe zurückzuführen.

Zusätzlich wurde gefunden, daß die bei Werkstoffen auf Asbestbasis vorhandene Richtungsabhängigkeit des kompensierenden Effektes, insbesondere bei Materialien, die nach dem Kalandrierverfahren hergestellt sind, bei den erfindungsgemäßen Massen, die diese plättchenförmigen Stoffe enthalten, nicht auftritt. Kräfte und Bewegungen können deshalb richtungsunabhängig gleichermaßen gut aufgenommen, kompensiert und-/oder umgeleitet werden.

Erfindungsgegenstand sind demnach asbestfreie Werkstoffe zur Verwendung als Dicht-, Dämpf- und/oder Trennelemente, die neben den als Asbestersatz bekannten Prozeßfasern und ggfs. Amierung und dem für solche Dichtungsmaterialien üblichen Bindern Plättchengraphit in einer Menge von 10 bis 70 Gew.-%, vorzugsweise 10 bis 60 Gew.-% und für besondere Verwendungszwecke, je nach Bedarf, insbesondere 25 bis 45 Gew.-%, z.B. 25 bis 35 oder 30 bis 35 Gew.-% oder, falls höhere Mengen erwünscht sind, was in manchen Fällen sehr vorteilhaft ist, 25 bis 60 Gew.-%, insbesondere 30 bis 50 Gew.-%.

Als Prozeß- und Armierungsfasern können alle üblichen Asbestersatzmittel verwendet werden, vorzugsweise Aramide.

Ihre Menge beträgt gewöhnlich 5 bis 30 Gew.-%, vorzugsweise 6 bis 15 Gew.-%, bezogen auf Endzusammensetzung.

Als elastische Binder werden die für Dichtungen üblichen Binder eingesetzt, z.B. alle schwefel- und peroxidisch vernetzbaren Elastomere.

Ihre Menge beträgt 5 bis 20 Gew.-%, vorzugsweise 8 bis 12 Gew.-%, bezogen auf Endzusammensetzung. Dazu kommen die üblichen Mengen an Die US-PS 4 176 097 zeigt eine Dichtung aus Baumwollfaser, amorphem Polypropylen und Butylkautschuk, wobei als Füllstoff auch plättchenförmiges Talkum gezeigt ist.

Die FR-OS 2 439 812 zeigt Massen mit 50 bis 75 % Glimmer und ebenfalls Cellulosefaser und 10 bis 35 % Binder.

Die FR-OS 2 482 124 zeigt Massen, die neben Phenolfasern auch Talkum oder Glimmer als Füllstoff und etwa 10 bis etwa 40 Gew.-Teile üblichen Binder enthalten.

Die EP-OS 166 376 zeigt als Füllstoff pyrogene Kieselsäure mit Feldspat, gefällte Kieselsäure und/oder Dolomit mit den üblichen Prozeßfasern und Bindern. Die Füllstüffe sind mineralisch pulvrig bis feinkörnig.

Vulkanisationmitteln (mit Beschleuniger und Alterungsschutzmittel), meist in etwa der gleichen Menge wie Binder.

Im übrigen können zusätzlich die in solchen Werkstoffen üblichen Füllstoffe verwendet werden.

Die menge es Plättchengraphits ist immer bezogen auf Gesamtmischung ohne Lösungsmittel. Es ist davon auszugehen, daß dann auch im fertigen Verbundwerkstoff, z.B. der Dichtung, etwa diese Menge vorliegt.

In der Zeitschrift Kunststoffberater 9 (1971), Seite 808 und 810 sind Füllstoffe für Hochpolymere beschrieben, wobei auch Glimmer und Talkum genannt sind. Dort handelt es sich aber nicht um Verbundwerkstoffe mit Prozeßfasern, also nicht um Asbestersatzwerkstoffe, sondern um die Füllung von Hochpolymeren ohne Faserzusatz abgesehen von dem Fall, wo Asbest selbst als Füllstoff gezeigt ist. Es wird ausgesagt, daß bei den meisten Polymer/Füllstoffkombinationen der Polumeranteil zur Erzielung ausreichender Fließfähigkeit bei der Verarbeitung mindestens 60 % beträgt, jedoch sind auch Spezialanwendungen, z.B. eine Quarz-Epoxdharz-

kombination mit 60 % Füllstoff genannt. Es handelt sich um zweikomponentige Harz/Füllstoffsysteme und nicht um mehrkomponentige Systeme Harz/Prozeßfaser/Plättchenförmiger Füllstoff sowie ggfs. /weiterer Füllstoff.

Die Größenverteilung des Plättchenförmigen, erfindungsgemäß zu verwendenden Materials ist bei Flockengraphit im typischen Fall 50 bis 250 μm, insbesondere 80 bis 200 μm Flockengröße. ES ist soll auszugehen, daß die Flocke auf jeden Fall größer sein soll als die bei einer Kalanderdrehung aufgebrachte Mischungsschicht, die je nach Kalanderdruck und Viskosität der Mischung 5 bis 15 μm beträgt. Wenn also die Flockengröße kleiner wird, ist die Viskosität der Mischung etwas geringer einzustellen und der Kalanderdruck zu erhöhen, damit auch die aufgebrachte Schicht dünner wird. Vorzugsweise sollte die Flockengröße mindestens doppelt so groß wie die aufgebrachte Schichtdicke sein.

Allgemein gilt, daß bei Flockengraphit beim Kalanderverfahren eher Flochengrößen bzw. Korngrößen um 80 bis 200 μm bevorzugt sind, während beim Arbeiten auf der Papiermaschine kleinere Korngrößen, insbesondere 50 bis 100, ganz besonders bevorzugt 50 bis 80 μm bevorzugt sind. Die angegebenen Korn- bzw. Flockengrößen stellen immer die mittlere Größe dar, da Graphit in einer recht breiten Kornverteilung vorliegt.

Die Anwesenheit von Pättchen geeigneter Größenverteilung, insbesondere 50 bis 200 μm, wirkt sich zusätzlich hemmend auf den Rißfortschritt bei auftretenden Mikrorissen unter Last aus. Die Beständigkeit von z.B. Dichtungen, die solche plättchenförmigen Bestandteile enthalten, ist aber erhöht.

Weiterhin ermöglicht der erfindungsgemäße Füllstof mit in sich verschiebbaren Schichtebenen, daß Schallwellen gezielt abgebaut oder umgeleitet werden können, und somit eine akustische Trennung von Räumen bzw. ein Verschieben von Schall vom hörbaren in den nicht-hörbaren Bereich ermöglicht werden kann.

Bei der Verwendung als Trennelement finden insbesondere die Gleiteigenschaften der Plättchen Anwendung.

Die beigefügten Figuren zeigen die Eigenschaften des erfindungsgemäßen Materials im Vergleich zu herkömmlichem asbestfreiem Material und gegenüber It-Material, also asbesthaltigem Material.

Fig. 1 zeigt das Bruchverhalten des erfindungsgemäßen asbestfreien Materials verglichen mit einem herkömmlichen asbestfreien Material und

Fig. 2 zeigt den unterschiedlichen Bruchverlauf von bekanntem asbestfreien Material, It-Material und erfindungsgemäßem Material am Beispiel eines Dichtungsringes.

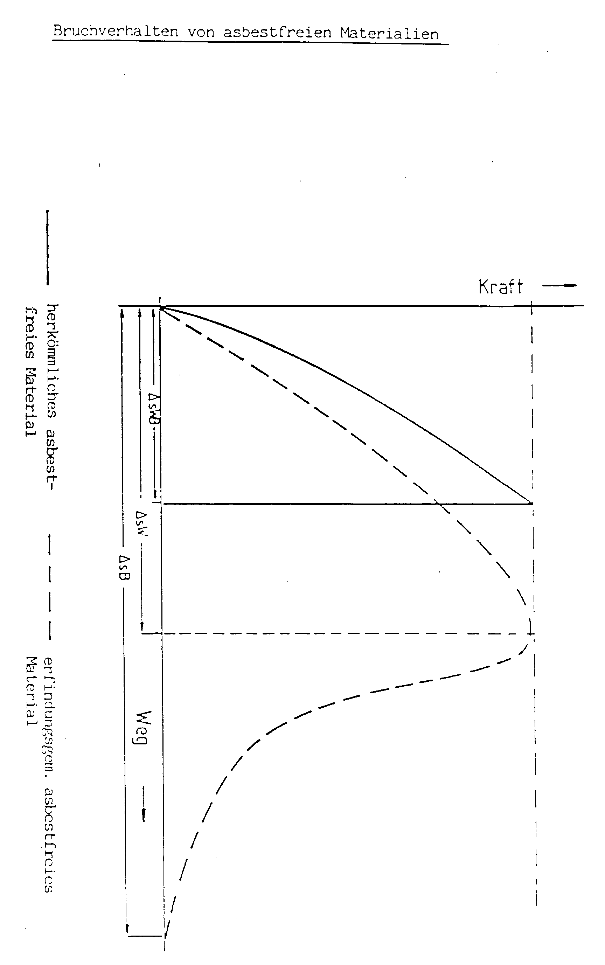

Wie aus Fig. 1 zu entnehmen ist, zeigt der Kraft-Weg-Verlauf beim Bruchversuch das elastischere Verhalten des neuen erfindungsgemäßen Werkstoffs gegenüber dem spröden Verhalten bei herkömmlichem asbestfreien Material, bei dem bei der Belastungsgrenze ein schneller Bruch erfolgt.

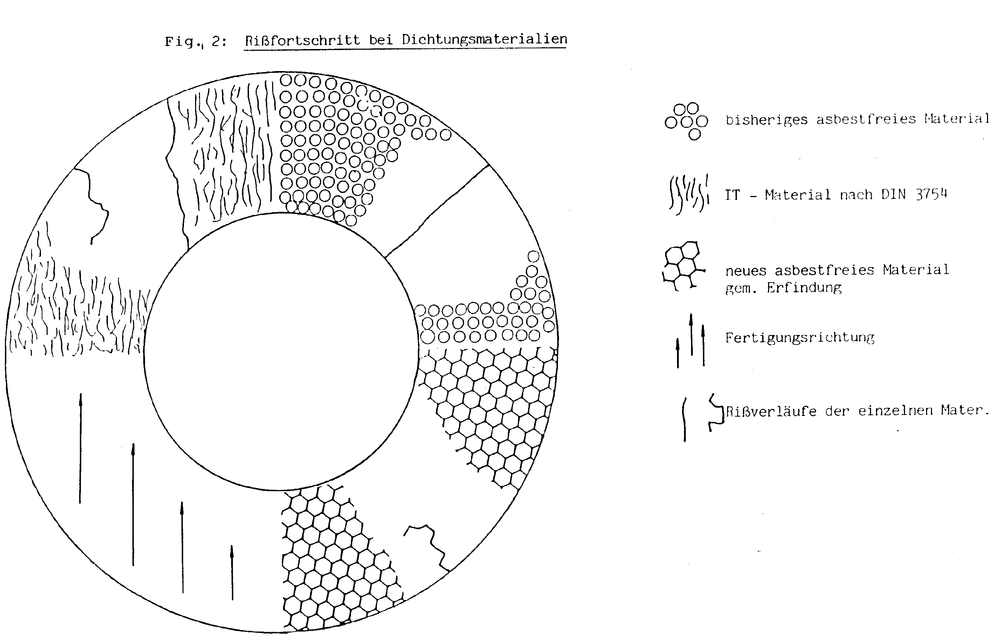

Aus Fig. 2 ist auch das günstigere Verhalten des erfindungsgemäßen Materials bezüglich des Rißfortschrittes ersichtlich. Während bei bisherigen asbestfreien Materialien bei auftretender lokaler Überbelastung sich der entstandene Riß über die Belastungsstelle hinaus bis zum Materialende hin fortsetzt, endet beim erfindungsgemäßen Material beim Erreichen nicht überlasteter Bereiche dieser Riß und zwar unabhängig von der Fertigungsrichtung des Materials.

Bei asbesthaltigem Material (It-Material) zeigt sich dieser Effekt auch, jedoch schwächt er sich hier in Fertigungsrichtung infolge der Faserorientierung ab, was sich daran zeigt, daß der ziemlich genau in Faserrichtung liegende Bruch von außen nach innen durch die ganze Dichtung geht, während der quer zur Fertigungsrichtung ansetzende Bruch in Fertigungsrichtung umbiegt und dann endet.

Das erfindungsgemäße Material zeigt also Vorteile gegenüber herkömmlichem asbestfreien Material einerseits, aber auch gegenüber It-Material zusätzlich zur Asbestfreiheit noch gewisse Vorteile im technischen Verhalten.

Die folgenden Beispiele erläutern die Erfindung.

Herstellungsbeispiel für die Herstellung von

1. It 400 (als Vergleichsmaterial)

2. erfindungsgemäßes auf dem Kalander gefertigtes neues Produkt (NPK) sowie

3. erfindungsgemäßes auf der Papiermaschine gefertigtes neues Produkte (NPP)

Die nachfolgende Beschreibung des Herstellungsprozesses Material auf Asbestbasis, im vorliegenden Fall It 400 gilt in gleicher Weise auch für die asbestfreien Qualitäten, nur mit entsprechend anderer Rezeptur.

1. It-Dichtungen (in der Fachwelt CAF-Dichtungen = compressed asbestos fibre sheets genannt) werden mittels des Kalanderverfahrens gefertigt. Dazu werden ca. 65 - 90 % Asbestfasern in gelösten oder gequollenen Elastomeren eingeknetet und eine hochpastöse bis granulatartige Mischung hergestellt, welche ebenfalls die entsprechenden Zusätze wie Vulkanisier-Verarbeitungshilfsmitteln und dergleichen enthält. Die Mischzeiten sind stark maschinenabhängig und können je nach Mischtechnik 5 Minuten bis 3 Stunden betragen. Diese Masse wird auf den sogenannten "it"-Kalandern bei ca. 130°C zu Platten der entsprechenden Dicke vulkanisiert. Das Spiezielle an diesem Verfahren bzw.

Werkstoffen ist, daß ein "Endloslaminat" hergestellt wird. Es vulkanisiert,gegen den Druck der gekühlten Walze je nach Umdrehung auf der beheizten Walze eine ca. 5 - 15μm dicke Schicht auf. Die hierfür verwen-

deten Faserstoffe müssen folglich fein und scherunempfindlich sein. Zum Ausgleichen der starken Längsorientierung sollten seitliche Verästelungen vorhanden sein.

Im einzelnen gilt für die praktische Durchführung dieses, in der Fachwelt wohlbekannten Verfahrens, noch folgendes:

Der Kautschuk wird in üblicher Weise in Kautschukmühlen granuliert. Das Kautschukgranulat wird, den jeweiligen Mengenverhältnissen entsprechend, etwa 24 Stunden lang in Quellbehältern mit Lösungsmittel angequollen, wobei in der Regel als Lösungsmittel Toluol in einer Menge von 3 l Toluol auf 1 kg Kautschuk verwendet wird. Der Kautschuk wird dann in geeignete Mischer, üblicherweise Pflugscharmischer eingefüllt und nach ca. 5-minütigem Mischen werden die zuvor mit Hächselwerkzeugen in bekannter Weise aufgeschlossenen Fasern, Füllstoffe und Vulkanisationsmittel innerhalb von weiteren, etwa 10 Minuten nach und nach zugegeben. Dann wird etwa 45 Minuten lang weitergemischt und, falls erforderlich, weiteres Lösungsmittel zugemischt, bis die Verarbeitungskonsistenz erreicht ist, wobei wiederum ca. 3 l Toluol auf 1 kg Kautschuk zugemischt werden.

Bei dieser Arbeitsweise und bei Verwendung dieses Mischertyps wird nach etwa 1-stündiger Gesamtmischzeit der Mischer abgeschaltet und die fertige Mischung der Weiterverarbeitung auf dem Kalander zugeführt.

1 a) Beater- (beater addition asbestos fibre sheets) Dichtungen werden auf Papieranlagen aus einer wässrigen Suspension von Fasern gefertigt, welche beim Auftrocknen miteinander verfilzen. Um eine für den Zusammenhalt im Papierblatt ausreichende Anzahl von Berührungspunkten zwischen den einzelnen Fasern zu schaffen, muß deren Overfläche durch Fibrillierung vergrößert werden. Bei der Stoffaufbereitung werden die Fasern (Trockenanteil 60 - 98 %) und Zuschlagstoff in Wasser dispergiert. Die Blattbildung des Papieres beginnt mit dem Auflaufen der wässrigen Stoffsuspension auf das endlose sich waargrecht fortbewegende Sieb. Die Sieblänge (15 - 40 m) ist abhängig von der Art und Dicke des Papiers sowie der Arbeitsgeschwindigkeit. Hier wird die Papierbahn entwässert und der Gautschpresse zugeführt, wo soweit entwässert und verdichtet wird, daß sich die Bahn kurze Zeit ohne unterlage selbst tragen kann. Nachdem innerhalb der Siebpartie 98 % der Gesamtwassermengen entzogen wurden, läuft die Bahn durch die Pressenpartie zur Trockenpartie, in welcher ein weiterer Wasserentzung und bei ca. 130°C die Wulkanisation stattfinden. Daran schließt sich das Kühlen , Glätten und Aufrollen an. Durch das Herstellverfahren wird eine homogene Verteilung von Fasern und Bindemittel erreicht, es findet keine Orientierung statt, die Materialdicke entsteht durch das Verfilzen in einem Auftrag und ohne Gegendruck. Die Faserstoffe sollen fibrillierbar, in Wasser dispergierbar und entsprechend elektrochemisch ladbar sein.

Im folgenden werden die entsprechenden Rezepturen angegeben.

Beispiel 1:

It 400 Material
   10 % Elastomere (2% NR, 6 % NBR, 2 % SBR)
   80 % Asbest 5D (typische Faserlänge 2 mm)
   10 % Vülkanisationsmittel (ZnO, Schwefel, Merkaptobeschleuniger, Alterungsschutzmittel)
   Das Material wird,wie oben angegeben,auf dem Kalander verarbeitet. Als Bindemittel können alle schwefel- und/ oder peroxidisch vernetzbare Elastomere verwendet werden.
   Die Testdaten sind in der nachfolgenden Tabelle 1 angegeben.

Beispiel 2:

NBK: erfindungsgemäßes Material auf dem Kalander verarbeitet

| | | |
|---|---|---|
| Elastomere | 10 % | (2% NR, 6% NBR, 2% SBR) |
| Flockengraphit | 30 % | (typische Flockengröße 100μm) |
| Aramidfasern | 15 % | (typische Faserlänge 2mm) |
| Vulkanisationsmittel | 10 % | (ZnO, Schwefel, Merkaptobeschl., Alterungsschutzmittel) |
| Füllstoffe | 35 % | (aktiv: Kieselsäure 10%, halbakt.:Kieselgur 20%,inakt: BaSO$_4$ 5%) |

Auch hier können als Bindemittel alle schwefel- und/ oder peroxidisch vernetzbaren Elastomere verwendet werden. Die Verarbeitung erfolgt auf dem Kalander wie für It-Material.

Die Tesdaten sind ebenfalls in Tabelle 1 angegeben.

Beispiel 3

```
NPP: erfindungsgemäßes auf der Papiermaschine herge-
stelltes Material

Latex                  8 %    (4% SBR, 4% NBR)
Flockengraphit        42 %    (typische Flockengröße 60µm)
Armadifasern          10 %    (typische Faserlänge 2mm)
Vulkanisation-
mittel                10 %    (ZnO, Schwfel, Merkaptobeschleuniger,
                              Alterungsschutzmittel)
Füllstoffe            30 %    (aktiv: Kieselsäure 15%
                              (halbaktiv: Kieselgur 15%)
```

Auh hier können als Bindemittel alles schwefel- und/ er peroxidisch vernetzbaren Elastomere verwendet werden.

Die Verarbeitung erfolgt auf der Papiermaschine wie eingangs angegeben.

Die Testdaten sind ebenfalls in Tabelle 1 zusammengestellt.

Die Abmessungen der Probekörper sind entsprechend der jeweiligen Prüfung nach DIN genormt, so gilt: Zugfestigmkeit nach DIN 52910 (Angabe hier Zugfestigkeit quer) Druckstandfestigkeit nach DIN 52913 bei 50N/N$^2$ und 300 °C nach 16 Stunden Kompressibilität und Rückfederung nach ASTM F36 Verfahren A

Gasdichtheit in Anlehnung an DIN 3535 Teil 4, jedoch mit anlagenbauspezifischen Pressungen von 80 N/mm$^2$ und Temperaturen von 300°C.

TABELLE 1

Materialkennwerte für IT 400 nach DIN 3754 (Vergleich), neues erfindungsgemäßes Produkt auf dem Kalander gefertigt (NPK) und neues erfindungsgemäßes Produkt auf der Papiermaschine gefertigt (NPP) im Vergleich

|  | IT 400 | NPK | NPP |
|---|---|---|---|
| Zugfestigkeit N/mm$^2$ | 21 | 13 | 10 |
| Druckstandsfestigkeit N/mm$^2$ | 30 | 35 | 20 |
| Kompressibilität % | 5-15 | 7-17 | 10 |
| Rückfederung % | 40 | 50 | 40 |
| Gasdichtheit ml/min | 2 | 2 | 5 |
| Dichte p/cm$^2$ | 1,8-2,0 | 1,35-1,55 | 1,3-1,5 |
| Dicke der untersuchten Prüfkörper: | 2mm, wenn nicht durch Prüfvor schrift anders geregelt. | | |

Die Werte zeigen, daß das neue Material lediglich eine geringere Zugfestigkeit hat, jedoch die sonstigen Werte vergleichbar sind. Da jedoch die Zugfestigkeit bei dem hier fraglichen Problem keine Rolle spielt, ist das neue Material bezüglich der hier wichtigen Daten dem Asbstmaterial mindestens gleichwertig.

Die Figuren 1 und 2 zeigen noch die weiteren Vorteile des Materials gegenüber bisherigem asbestfreien Material und (Bild 2)auch gegenüber It-Material.

**Patentansprüche**

1. Asbestfreier Werkstoff aus Elastomer, üblichen Prozeßfasern und Füllstoff, dadurch gekennzeichnet, daß er neben den üblichen Prozeßfasern und 5 bis 20 % elastischem Binder Plättchengraphit in einer Menge von 10 bis 70 Gew.-%, bezogen auf Gesamtmasse ohne Lösungmittel,sowie ggfs. übliche weitere Füllstoffe aufweist.

2. Werkstoff nach Anspruch 1, dadurch gekennzeichnet, daß er 10 bis 60 Gew.-% Plättchengraphit aufweist.

3. Werkstoff nach Anspruch 1 oder 2, dadurch gekennzeichnet, daß er 5 bis 30 Gew.-% Prozeßfasern, 5 bis 20 % elastischen Binder und 10 bis 60 Gew.-% Plättchengraphit, Rest übliche Füllstoffe, aufweist.

4. Verfahren zur Herstellung des asbestfreien Werkstoffes nach Anspruch 1 bis 3, dadurch gekennzeichnet, daß man in an sich bekannter Weise auf der Papiermaschine oder auf dem Kalander eine Mischung oder Suspension verarbeitet, die bezogen auf Feststoffe, 10 bsi 70 Gew.-%, insbesondere 10 bis 60 Gew.-% Plättchengraphit neben den üblichen Prozeßfasern und 5 bis 20 % elastischen Bindern sowie ggfs. üblichen Füllstoffen enthält.

5. Verwendung des asbestfreien Werkstoffes nach Anspruch 1 bis 3 als Dicht-, Dämpf- und/oder Trenneelement.


## Claims

1. An asbestos-free material made of elastomer, conventional process fibers and filler, characterized in that it contains, in addition to the conventional process fibers and 5 to 20 % of elastic binder, flake graphite in an amount from 10 to 70 % by weight, based upon the total composition, without solvent, as well as optionally further conventional fillers.

2. The material according to Claim 1, characterized in that it contains 10 to 60 % by weight of flake graphite.

3. The material according to Claim 1 or 2, characterized in that it contains 5 to 30 % by weight of process fibers, 5 to 20 % of elastic binder and 10 to 60 % by weight of flake graphite, the balance being conventional fillers.

4. A process for the production of the asbestos-free material according to Claims 1 to 3, characterized in that a mixture or suspension is processed in a manner known per se on a paper machine or calender, which, based upon solids, contains 10 to 70 % by weight, especially 10 to 60 % by weight, of flake graphite in addition to the conventional process fibers and 5 to 20 % of elastic binders as well as optionally conventional fillers.

5. Use of the asbestos-free material according to Claims 1 to 3 as a sealing, damping and/or separating element.


## Revendications

1. Matériau exempt d'amiante, composé d'un élastomère, de fibres industrielles usuelles et d'une charge, caractérisé en ce qu'il contient, en plus des fibres industrielles usuelles et 5 à 20 % de liant élastique, des lamelles de graphite à raison de 10 à 70 % en poids, par rapport à la masse totale, sans solvant, ainsi qu'éventuellement d'autres charges usuelles.

2. Matériau selon la revendication 1, caractérisé en ce qu'il contient 10 à 60 % en poids de lamelles de graphite.

3. Matériau selon la revendication 1 ou 2, caractérisé en ce qu'il contient 5 à 30 % en poids de fibres industrielles, 5 à 20 % de liant élastique et 10 à 60 % en poids de lamelles de graphite, le reste étant composé de charges usuelles.

4. Procédé de fabrication du matériau exempt d'amiante selon une des revendications 1 à 3, caractérisé en ce que l'on traite d'une manière connue en soi, dans la machine à papier ou sur la calandre, un mélange ou une suspension qui contient, par rapport aux matières solides, 10 à 70 % en poids, en particulier 10 à 60 % en poids, de lamelles de graphite, en plus des fibres industrielles usuelles et 5 à 20 % de liants élastiques, ainsi qu'éventuellement des charges usuelles.

5. Utilisation du matériau exempt d'amiante selon une des revendications 1 à 3, comme élément d'étanchéité, d'amortissement et/ou de séparation.

Bruchverhalten von asbestfreien Materialien

Fig. 2:  Rißfortschritt bei Dichtungsmaterialien

bisheriges asbestfreies Material

IT – Material nach DIN 3754

neues asbestfreies Material
gem. Erfindung

Fertigungsrichtung

Rißverläufe der einzelnen Mater.

EP 0 308 471 B1